# EUROPÄISCHE PATENTSCHRIFT

(11) **EP 1 322 697 B1**
(45) Veröffentlichungstag und Bekanntmachung des Hinweises auf die Patenterteilung: **26.11.2008**
(21) Anmeldenummer: 01960163.2
(22) Anmeldetag: 03.08.2001
(51) Int. Cl.: C08J 7/00, B29C 71/00, B29C 71/02

(54) **VERFAHREN ZUR MODIFIZIERUNG VON KUNSTSTOFFOBERFLÄCHEN**
METHOD FOR MODIFYING PLASTIC SURFACES
PROCEDE POUR MODIFIER DES SURFACES PLASTIQUES

(30) Priorität: 22.08.2000 DE 10042566
(43) Veröffentlichungstag der Anmeldung: 02.07.2003
(73) Patentinhaber: Leibniz-Institut für Polymerforschung Dresden e.V., 01069 Dresden (DE)
(72) Erfinder: LEHMANN, Dieter, 01646 Coswig (DE); MEIER-HAACK, Jochen, 01259 Dresden (DE); KOLZ, Harald, 09131 Chemnitz (DE)
(74) Vertreter: Rauschenbach, Marion
(86) Internationale Anmeldenummer: PCT/DE2001/003045
(87) Internationale Veröffentlichungsnummer: WO 2002/016483

(56) Entgegenhaltungen:
- EP-A- 0 267 646
- EP-A- 0 438 114
- EP-A- 0 491 293
- EP-A- 1 153 965
- EP-A- 1 156 075
- DE-A- 1 694 972
- DE-A- 19 902 948
- DE-B- 1 229 278
- US-B1- 6 284 387

## Beschreibung

Die Erfindung bezieht sich auf die Gebiete der Chemie und des Maschinenbaus und betrifft ein Verfahren zur Modifizierung von Kunststoffoberflächen insbesondere während oder unmittelbar nach einem Formgebungsprozess, wodurch die Kunststoffoberflächen beispielsweise eine bessere Haftung bei nachfolgenden technologischen Schritten, wie Kleben, Fügen, Schweißen, Lackieren, Beschichten, Bedrucken oder beim Mehrkomponentenspritzgießen oder wodurch die Kunststoffoberflächen beispielsweise auch eine bessere Antihaftung aufweisen.

Bei der Kombination von verschiedenen Materialien wie bei Mehrkomponentenspritzgießen, bei der Mehrschicht-(folien-)extrusion, beim Kleben, beim Bedrucken usw. wird die Verbundfestigkeit durch die Eigenschaften in der Grenzfläche bestimmt. Die allgemeine Regel - je geringer die Unterschiede in der Oberflächenspannung und in der Polarität der Haftpartner, umso verträglicher sind die Substrate und umso besser ist die Haftung - ist nur bedingt anwendbar. Nach dieser empirischen Regel werden vielfach die Substrate entweder entsprechend ausgesucht oder dafür hergestellt. Die Ursache für die Abweichungen von dieser Regel ist darin zu suchen, dass die Verbundfestigkeit und die daraus resultierenden Eigenschaften durch eine Vielzahl chemischer, physikalischer oder materialspezifischer Parameter beeinflusst werden, die meist komplex miteinander zusammenhängen. Von Wu, S.: Polymer Interfaces and Adhesion, Marcel Dekker, Inc. New York Basel 1982, wurden verschiedene Parameter und auch die Methoden zur Bestimmung dieser Größen ausführlich beschrieben. Einen erheblichen Einfluss auf die Verbundfestigkeit haben die Vorbehandlung der Oberflächen und die technisch-technologischen Parameter bei der Verbundbildung.

In vielen Anwendungsfällen wird zur Verbesserung der Verbundbildung in der Grenzfläche eine chemische oder physikalische Vorbehandlung, wie Beflammen, Coronaentladung, Plasmabehandlung, Laserbehahdlung vorgeschaltet oder die Verbesserung der Verbundbildung über den Auftrag von Haftvermittlern (Primer) realisiert. Alle diese Methoden stellen zeit- und kostenaufwendige Verfahren dar.

Die bekanntesten Verfahren zur Vorbehandlung sind:
Plasmabehandlung,
Coronabehandlung,
Beflammen,
Chemische Behandlung, wie beispielsweise Ätzen,
Mechanische Behandlung, wie beispielsweise Abrasion.

Die Plasma- und Coronabehandlung sind die am weitesten verbreiteten Methoden. Durch elektrische Entladung in Luft (Corona) oder im leichten Vakuum (Plasma) werden die Substrate an der Oberfläche aktiviert, das heißt, durch Bildung polarer Gruppen modifiziert. Dadurch wird eine erhöhte Reaktivität an der Kunststoffoberfläche erzielt. Derart behandelte Kunststoffoberflächen weisen eine bessere Haftung bei nachfolgenden technologischen Schritte auf (Mehrkomponentenspritzgießtechnik 2000, Springer-VDI-Verlag, Düsseldorf, 2000).

In der DE 31 36 574 wird als nachgeschaltete Methode zur Verbesserung der Oberflächenkenndaten von Formstoffen aus Kunststoff, insbesondere aus PVC, zur Unterdrückung der elektrostatischen Aufladung der Formstoff der Einwirkung eines kalten Plasmas ausgesetzt, das in einer Gasatmosphäre erzeugt wird, die eine organische Stickstoffverbindung bei einem Druck von 0,01 bis 1330 Pa enthält. Diese organische Stickstoffverbindung kann ein Amin, ein Amid, ein Diamin oder ein Heterocyclus mit mindestens einem Stickstoffatom im Heteroringsystem sein.

Ein Verfahren zur Modifizierung der Oberflächeneigenschaften von Olefincopolymeren wird in DD 211 802 beschreiben. Durch nachträgliche Modifizierung von Oberflächeneigenschaften von Halbzeugen und Formstoffen auf Basis von Olefinkopolymeren wird eine dauerhafte Verklebbarkeit, Bedruckbarkeit, Metallisierbarkeit und Lackierbarkeit erreicht. Die Oberflächenmodifizierung wird durch chemische Ätzung erzielt.

Verfahren zur Herstellung fluorierter Oberflächen von Polymeren werden in DD 280 772, DE 35 11 743 und DE 35 32 086 beschrieben. Die nachträgliche Oberflächenmodifizierung von Formkörpern oder vom bahnförmigen Kunststoffmaterial wird durch direkte Einwirkung von Fluor auf die Polymeroberfläche erreicht (Direktfluorierung).

Ein Verfahren und die Vorrichtung zur Erzeugung funktioneller Atomgruppierungen in makromolekularen Stoffen, wie sie beispielsweise in Form von Seide, Wolle, Zellulose, Polyethylen, Polypropylen usw. vorkommen, wird in DE 36 19 694 beschrieben. Ein makromolekulares Substrat wird in einer vorgegebenen Gasatmosphäre einer stillen elektrischen Entladung ausgesetzt, wobei gleichzeitig eine intensive Bestrahlung mit ultraviolettem Licht bestimmter Wellenlänge erfolgt, das in der Oberfläche des Substrates vorhandene aliphatische Atomgruppierungen aktiviert und den Einbau der in der stillen elektrischen Entladung gebildeten Reaktionsprodukte ermöglicht.

In der DE 40 09 624 wird ein Verfahren zur Aktivierung von Kunststoffoberflächen durch Behandlung mit Siliciumtetrachlorid sowie die Verwendung der Verfahrenserzeugnisse beschrieben.

In allen angegebenen Verfahren wird im Nachgang nach der Formgebung am kalten Formteil oder Halbzeug eine Modifizierung vorgenommen.

Für die Adhäsion selbst werden unterschiedliche Mechanismen verantwortlich gemacht. In der Literatur werden vorrangig vier Mechanismen diskutiert: mechanische Verhakung, (Inter-)Diffusion, elektrostatische Anziehung und zwischenmolekulare Wechselwirkung einschließlich der chemischen Bindung (Lee, L.H.: Fundamentals of Adhesion, Plenum Press, New York, 1991). Über die Abschätzung der Wechselwirkungsenergien kann davon ausgegangen werden, dass durch van-der-Waals-Kräfte (physikalische Wechselwirkungskräfte) in der Grenzfläche vielfach keine ausreichende Haftfestigkeit erzielt wird. Selbst Wasserstoffbrückenbindungen mit E ≈ 50 kJ/mol liegen wechselwirkungsenergetisch noch weit unter den Wechselwirkungsenergien chemischer Bindungen mit 60 < E < 700 kJ/mol für kovalente Bindungen und 500 < E < 1000 kJ/mol für Ionenbindungen.

Durch nachträgliche Modifizierung von Substratoberflächen mit Haftvermittlern können gezielt reaktive Gruppen an der Oberfläche eingeführt werden, die für chemische Reaktionen mit dem zweiten Substrat zur Verfügung stehen.

Weiterhin sind die Verfahren zur Polymermodifizierung in der Bulkphase, zum reaktiven Spritzgießen und zur reaktiven Extrusion bekannt (Lunkwitz, K. u.a.: Werkstoffwissenschaft, 8. Auflage, Dt. Verlag für Grundstoffindustrie, Stuttgart, 1996).

Nachteilig bei den bekannten Verfahren zur Verbesserung der Verbundbildung zwischen Kunststoffoberflächen ist, dass sie zeit- und kostenaufwendig sind.

Bekannt sind auch spezielle Mehrkomponentenspritzgießverfahren (Ehrenstein, G.W. u.a., Mehrkomponentenspritzgießen, Springer VDI Verlag), wie das Montagespritzgießen. Bei derartigen Verfahren ist es in einigen Fällen erforderlich, dass einzelne oder mehrere Teile während des Spritzgießprozesses voneinander getrennt werden, da beispielsweise diese Teile als Scharniere oder Gelenke dienen sollen. Dazu werden beispielsweise unverträgliche Polymere verwendet oder durch Kühlen des Vorspritzlings und Einspritzen der zweiten Komponente kann das Verschmelzen und die Haftung in den Grenzflächen der beiden Teile vermieden werden.

Nachteile dieses Verfahrens sind ihr großer Aufwand und ein sehr spezialisiertes technologisches Regime.

Weiterhin ist nach EP A 0 267 646 ein Verfahren bekannt, durch welches Polyamidartikel in einem Schmelzeverarbeitungsprozess hergestellt werden, wobei die Artikel nach der Formgebung einer gesonderten Wärmebehandlung bei Temperaturen über 220°C aber niedriger als der Erweichungspunkt des Polyamides unterzogen werden. Durch die nachträgliche Wärmebehandlung sollen die bei der Formgebung entstandenen kristallinen Bereiche und ihre räumliche Verteilung verbessert sowie das Molekulargewicht des Polymeren erhöht werden.

Mit der DE 12 29 278 B1 ist ein Verfahren zur thermischen Nachbehandlung von Polyamidspritzgussteilen bekannt, bei dem als Umgebungsmedium bei der gesonderten Temperung Silikonöl verwendet wird. Dabei soll die Nachbehandlungstemperatur dicht unter dem Schmelzpunkt des Polyamides liegen. Auch hier sollen durch die Nachbehandlung die bei der Formgebung entstandenen kristalline Bereiche und ihre räumliche Verteilung verbessert werden, wodurch verbesserte Festigkeit, Steifheit, Härte und Abriebfestigkeit erreicht werden.

Nachteilig an diesen Verfahren ist die Durchführung eines weiteren separaten Verfahrensschrittes.

Aus der DE 199 02 293 A1 ist ein Verfahren zur Modifizierung von Polymersubstraten durch Oberflächenfixierung eigenschaftsbestimmender Makromoleküle bekannt.
Bei diesem Verfahren wird das Polymersubstrat vor der Pfropfung mit dem mindestens einem Polymer mit einer Lösung vorbehandelt. Diese Lösung enthält mindestens ein olefinisch ungesättigtes Monomer, mindestens einen Thermoinitiator und/oder mindestens einen Photoinitiator und gegebenenfalls ein Lösungsmittel.
Nach Aufbringen der Lösung auf das Polymersubstrat wird strahleninduziert oder thermischinduziert die Pfropfreaktion ausgelöst.
Auch hier erfolgt die Modifizierung der Polymersubstrate in einem separaten Schritt erst nach der Formgebung und abschließender Fertigstellung des Polymersubstrates.

Nach EP A 0 491 293 sind Polyolefinformteile und ein Verfahren zu ihrer Herstellung bekannt. Die Polyolefinartikel mit einem Polyolefin mit einer modifizierten Oberfläche bestehen aus einem Basispolyolefinartikel, der aus einem hydrophoben Polyolefin gebildet ist und aus einem Copolymermaterial, das mit der Oberfläche des Basispolyolefinartikels warmverschweißt ist, wobei der hydrophobe Anteil des Copolymermaterials im Polyolefin löslich und der modifizierte Anteil des Copolymermaterials im Polyolefin unlöslich ist. Hergestellt wird ein derartiger Polyolefinartikel durch ein Verfahren, bei dem die Oberfläche des hydrophoben Polyolefins mit einem Copolymermaterial kontaktiert wird, wobei das hydrophobe Polyolefin im Wesentlichen geschmolzen vorliegt. Durch diesen Vorgang erfolgt die Warmverschweißung der Oberfläche des Polyolefinartikel mit dem Copolymermaterial.

Nachteilig ist, dass nur Copolymerisate eingesetzt werden können, die mit der Oberfläche des Basispolyolefinartikels warmverschweißbar sind.

In DE 1 694 972 A1 wird ein Verfahren angegeben, bei dem zur Verbesserung der Haftwirkung einer inerten thermoplastischen Kunststoff-Innenfläche mit einer darauf aufzubringenden Auskleidung die Innenfläche von Formblasprodukten während ihrer Herstellung mit einem oxydierenden Gas behandelt wird. Dabei beträgt die Kontaktzeit mit dem oxydierenden Gas zwischen 0,8 und 8 s. Weiterhin ist angegeben, dass die oxydative Wirkung des Gases durch Zusätze noch beschleunigt werden kann.

Die Aufgabe der vorliegenden Erfindung besteht darin, ein Verfahren zur Modifizierung von Kunststoffoberflächen anzugeben, welches zur Aktivierung oder Passivierung der Kunststoffoberflächen eingesetzt werden kann, das einfach handhabbar ist und die Aktivierung oder Passivierung der Kunststoffoberfläche während oder unmittelbar nach dem Formgebungsprozess des Kunststoffes realisiert.

Die Erfindung ist in den Ansprüchen angegeben. Weiterbildungen sind Gegenstand der Unteransprüche.

Bei dem erfindungsgemäßen Verfahren werden Kunststoffoberflächen während oder unmittelbar nach einem Formgebungsprozess und unter Ausnutzung der Werkzeug- und/oder Materialwärme modifiziert, wobei die Temperatur der Kunststoffoberfläche mindestens die onset-Temperatur des Reaktionspeaks in der entsprechenden DSC-Kurve ist. Die Modifizierung erfolgt, indem die sich bildende Kunststoffoberfläche oder die sich unmittelbar vorher gebildete Kunststoffoberfläche ganz oder teilweise mit Modifikatorsubstanz(en) in Kontakt gebracht wird. Dabei werden als Modifikatorsubstanz(en) solche Stoffe eingesetzt, die mit der Oberfläche des geformten Kunststoffes eine Reaktion eingehen und durch Interdiffusion in die Oberfläche eindringen und auf der Oberfläche aufschmelzen, oder die mit der Oberfläche des geformten Kunststoffes eine Reaktion eingehen und auf der Oberfläche aufschmelzen.

Durch das erfindungsgemäße Verfahren können die bisher getrennten Verfahrensschritte Formgebung und Oberflächenmodifizierung in einem Verfahrensschritt vereint werden.
Weiterhin ist die erreichte Modifizierung gegenüber den bisher bekannten Methoden zur Oberflächenmodifizierung, wie Coronaentladung, Beflammen und Plasmabehandlung, zeitlich stabil.

Ferner ist mit dem erfindungsgemäßen Verfahren die Herstellung beweglicher Teile aus gleichen Materialien ohne großen Aufwand möglich. Nach der Herstellung eines Kunststoffvorspritzlings mit einer Modifizierung der Oberfläche zur Passivierung mittels Modifikatorsubstanzen, die aus Verbindungen mit mindestens einer reaktiven Gruppe bestehen, wobei vorzugsweise perfluorierte und/oder fluorhaltige und/oder siliconhaltige und/oder paraffinische, niedermolekulare und/oder oligomere und/oder polymere Verbindungen oder Gemischen davon mit mindestens einer Funktionalität zum Einsatz kommen, können eine oder mehrere weitere Komponenten an-, auf- oder eingespritzt werden. Die Funktionalität dient zur direkten Kopplung eines Teiles der Modifikatorsubstanz an der Oberfläche unter Modifizierung und Reaktion mit sich selbst zu dünnen verzweigten und/oder vernetzten Filmen, die noch über chemische Kopplung der Restfunktionalitäten mit dem Polymer der Schmelzeoberfläche reagieren und diese modifizieren.

Das erfindungsgemäße Verfahren kann eingesetzt werden bei Mehrkomponentenspritzgießprozessen (Montagespritzgießen) zur Herstellung gefügter, beweglicher Teile. Im Verfahren muss nicht zwischendurch eine zusätzliche Operation an der Oberfläche zur Desaktivierung/Passivierung erfolgen, in der mit einer Komponente/Trennmittel die Oberfläche gegen ein Verschmelzen/eine Verbindung im zweiten Takt des Spritzgießprozesses verhindert wird.

Zur ausreichenden Trennung in der Grenzfläche zwischen den Komponenten zur Herstellung von beweglichen Teilen im Montagespritzgießen wird durch direkten Kontakt einer oder mehrerer Substanzen zur Oberflächenmodifizierung in einem formgebenden Werkzeug mit der Kunststoffschmelzeoberfläche oder der noch reaktiven Kunststoffoberfläche, wobei die Temperatur der Oberfläche des Kunststoffes mindestens die onset-Temperatur des Reaktionspeaks in der entsprechenden DSC-Kurve ist, die Oberflächen- oder Grenzflächenmodifizierung unter Ausnutzung der Werkzeug- und/oder Materialwärme realisiert.

Ebenfalls ist durch das erfindungsgemäße Verfahren der Grad und das Ausmaß der Modifizierung durch die Art und Konzentration der Modifikatorsubstanzen für den jeweiligen Anwendungsfall gezielt einstellbar.

Die Modifikatorsubstanzen werden in fester, flüssiger oder gasförmiger Form oder durch elektrostatische Verfahren auf die oder an die Oberfläche des Kunststoffteiles auf- oder herangebracht. Sie können auch vor dem Formgebungsprozess auf die Oberfläche des Formwerkzeuges aufgesprüht, bedampft oder über einen Flüssigkeitsfilm oder durch elektrostatische Verfahren aufgebracht oder als Aerosol oder als Dampf in das Formwerkzeug eingebracht werden.

Die Modifikatorsubstanzen können in reiner Form oder auch verdünnt in Form von Lösungen aufgebracht werden. Als Lösungsmittel können dabei Wasser oder niedermolekulare leicht flüchtige, vorzugsweise nicht halogenierte Lösungsmittel, wie z.B. niedermolekulare Alkohole (Methanol, Ethanol, Isopropanol), oder niedermolekulare Ketone, wie z.B. Aceton, Methylethylketon oder Mischungen davon eingesetzt werden.

Die Modifikatorsubstanzen werden in einer solchen Menge aufgebracht, dass die Konzentration der reaktiven Gruppen auf der Kunststoffoberfläche im Bereich von 1 x 10⁻¹⁰ bis 1 x 10⁻⁶ mol/cm² liegt.
Die Modifikatorsubstanzen können einzeln oder im Gemisch eingesetzt werden.

Es können den Modifikatorsubstanzen auch katalytisch aktive Substanzen beigemischt sein, die die Reaktion mit der Kunststoffoberfläche beschleunigen und/oder die Reaktionstemperatur herabsetzen können.

Das erfindungsgemäße Verfahren erfordert nur einen geringen apparativen Aufwand und ist flexibel einsetzbar.

Im Weiteren wird die erfindungsgemäße Lösung an mehreren Ausführungsbeispielen näher erläutert.

Die Prüfkörper (Zugstab) werden auf einer Spritzgießmaschine mit Werkzeugtemperierung und Campus Prüfkörperwerkzeug (Zugstab/2-fach) hergestellt. Für die Modifizierung von Polymeroberflächen im erfindungsgemäßen Verfahren wurde eine Modifizierungssubstanz in Form einer verdünnten Lösung auf die Wandung des Spritzgießformwerkzeuges aufgetragen. Um eine gleichmäßige Verteilung der Modifikatorsubstanz auf der Wandung zu gewährleisten, erfolgte die Auftragung im Sprühprozess. Hierfür wurde eine pneumatische Dosiereinheit eingesetzt, die an die Geometrie der Spritzgießmaschine angepasst ist.
Die Polymerproben wurden vor der Verarbeitung für mindestens 8 h bei 80°C im Vakuum getrocknet.

### Beispiel 1:

Die Charakterisierung der modifizierten Polymeroberflächen erfolgte mittels Kontaktwinkelmessungen und/oder Bestimmung der Scherfestigkeit verklebter Proben. Für die Verklebung der Polymerproben wurde ein Heißkleber (Monopox 1196, DELO, Landsberg) verwendet. Die Verklebebedingungen waren folgende:

| | |
|---|---|
| Trocknung: | 1h 150°C |
| Abkühlen: | 1h im Exsikkator bei Raumtemperatur |
| Härtung: | 1 h 150°C unter Druckbelastung |
| Lagerung: | Normalklima (23°C, 50 % rel. Luftfeuchtigkeit) |

Die Verarbeitung von Polyamid-6 und die Herstellung der Probekörper erfolgten nach dem oben beschriebenen Verfahren.

| | |
|---|---|
| Werkzeugtemperatur: | 110°C |
| Massetemperatur: | 240°C |
| Modifikatorsubstanz: | keine |
| Scherfestigkeit: | 30 N/mm² |

### Beispiel 2:

Die Verarbeitung von Polyamid-6 und die Herstellung der Probekörper erfolgten nach dem im Beispiel 1 beschriebenen Verfahren.

| | |
|---|---|
| Werkzeugtemperatur: | 110°C |
| Massetemperatur: | 240°C |
| Modifikatorsubstanz: | 15µg/cm²; 1 Ma.-% Polyacrylsäure in Methanol |
| Scherfestigkeit: | 36 N/mm² |

### Beispiel 3:

Die Verarbeitung von Polyamid-6 und die Herstellung der Probekörper erfolgten nach dem im Beispiel 1 beschriebenen Verfahren.

| | |
|---|---|
| Werkzeugtemperatur: | 110°C |
| Massetemperatur: | 240°C |
| Modifikatorsubstanz: | 30 µg/cm²; 1 Ma.-% Polyacrylsäure in Methanol |
| Scherfestigkeit: | 38 N/mm² |

### Beispiel 4:

Die Verarbeitung von Polyamid-6 und die Herstellung der Probekörper erfolgten nach dem im Beispiel 1 beschriebenen Verfahren.

| | |
|---|---|
| Werkzeugtemperatur: | 80°C |
| Massetemperatur: | 260°C |
| Modifikatorsubstanz: | 30 µg/cm²; 1 Ma.-% Polyacrylsäure in Methanol |
| Scherfestigkeit: | 47 N/mm² |

### Beispiel 5

Die Verarbeitung von Polyamid-6 und die Herstellung der Probekörper erfolgten nach dem im Beispiel 1 beschriebenen Verfahren.

| | |
|---|---|
| Werkzeugtemperatur: | 80°C |
| Massetemperatur: | 260°C |
| Modifikatorsubstanz: | 30 µg/cm²; 1 Ma.-% Adipinsäure/Polyacrylsäure 1:1 in Methanol |
| Scherfestigkeit: | 40 N/mm² |

### Beispiel 6

Die Verarbeitung von Polyamid-12 und die Herstellung der Probekörper erfolgten nach dem im Beispiel 1 beschriebenen Verfahren. Die Charakterisierung erfolgte mittels Randwinkelmessungen.

| | |
|---|---|
| Werkzeugtemperatur: | 80°C |
| Massetemperatur: | 260°C |
| Modifikatorsubstanz: | 30 µg/cm²; 1 Ma.-% Polyacrylsäure in Methanol |
| Wasserrandwinkel: | Fortschreitwinkel: 64° (87°) Rückzugswinkel: 27° (54°) |

(Die Werte in Klammern sind von den unmodifizierten Proben)

### Beispiel 7

Die Verarbeitung von Polyamid-12 und die Herstellung der Probekörper erfolgten nach dem im Beispiel 1 beschriebenen Verfahren. Die Charakterisierung erfolgte mittels Randwinkelmessungen.

| | |
|---|---|
| Werkzeugtemperatur: | 80°C |
| Massetemperatur: | 260°C |
| Modifikatorsubstanz: | 30 µg/cm²; 1 Ma.-% Trimellitsäureanhydrid in Aceton |
| Wasserrandwinkel: | Fortschreitwinkel: 71° (87°) Rückzugswinkel: 37° (54°) |

(Die Werte in Klammern sind von den unmodifizierten Proben)

### Beispiel 8

Die Verarbeitung von Polyamid-6,6 und die Herstellung der Probekörper erfolgten nach dem im Beispiel 1 beschriebenen Verfahren. Die Charakterisierung erfolgte mittels Randwinkelmessungen.

| | |
|---|---|
| Werkzeugtemperatur: | 80°C |
| Massetemperatur: | 280°C |
| Modifikatorsubstanz: | 15 µg/cm²; 1 Ma.-% Polyacrylsäure in Methanol |
| Wasserrandwinkel: | Fortschreitwinkel: 57° (77°) Rückzugswinkel: 19° (38°) |

(Die Werte in Klammern sind von den unmodifizierten Proben)

### Beispiel 9

Die Verarbeitung von Polyamid-6,6 und die Herstellung der Probekörper erfolgten nach dem im Beispiel 1 beschriebenen Verfahren. Die Charakterisierung erfolgte mittels Randwinkelmessungen.

| | |
|---|---|
| Werkzeugtemperatur: | 80°C |
| Massetemperatur: | 280°C |
| Modifikatorsubstanz: | 15 µg/cm²; 1 Ma.-% Trimellitsäureanhydrid in Aceton |
| Wasserrandwinkel: | Fortschreitwinkel: 69° (77°) Rückzugswinkel: 27° (38°) |

(Die Werte in Klammern sind von den unmodifizierten Proben)

### Beispiel 10:

Die Verarbeitung von Polycarbonat und die Herstellung der Probekörper erfolgten nach dem im Beispiel 1 beschriebenen Verfahren. Die Charakterisierung erfolgte mittels Randwinkelmessungen.

| | |
|---|---|
| Werkzeugtemperatur: | 80°C |
| Massetemperatur: | 280°C |
| Modifikatorsubstanz: | 30 µg/cm²; 0,5 Ma.-% Polyethylenimin in Wasser |
| Wasserrandwinkel: | Fortschreitwinkel: 74° (87°) Rückzugswinkel: 27° (71°) |

(Die Werte in Klammern sind von den unmodifizierten Proben)

### Beispiel 11:

Die Verarbeitung von Polycarbonat und die Herstellung der Probekörper erfolgten nach dem im Beispiel 1 beschriebenen Verfahren. Die Charakterisierung erfolgte mittels Randwinkelmessungen.

| | |
|---|---|
| Werkzeugtemperatur: | 80°C |
| Massetemperatur: | 280°C |
| Modifikatorsubstanz: | 15 µg/cm²; 0,5 Ma.-% 1,12 Diaminododekan in Methanol |
| Wasserrandwinkel: | Fortschreitwinkel: 80° (87°) Rückzugswinkel: 41 ° (71 °) |

(Die Werte in Klammern sind von den unmodifizierten Proben)

### Beispiel 12:

Die Verarbeitung von Polyamid-6 erfolgte im Profilextrusionsverfahren. Die in Beispiel 1 beschriebene Dosiereinheit direkt hinter der Profildüse installiert, so dass der heiße Profilstrang mit der Modifikatorlösung beaufschlagt werden konnte. Die Massetemperatur in der letzten Extruderzone betrug 260°C. Die Charakterisierung erfolgte mittels Randwinkelmessungen. Es wurden folgende Ergebnisse erhalten:

| | Fortschreitwinkel | Rückzugswinkel |
|---|---|---|
| ohne Modifikator: | 77° | 35° |
| 1 Ma.-% Polyacrylsäure in Methanol: | 60° | 25° |
| 1 Ma.-% Trimellitsäureanhydrid in Methanol: | 65° | 30° |

### Beispiel 13:

Es wurde Polyamid-6 analog Beispiel 1 unter den nachfolgend aufgeführten Bedingungen verarbeitet. Die Charakterisierung erfolgte mittels Randwinkelmessungen.

| | |
|---|---|
| Werkzeugtemperatur: | 80°C |
| Massetemperatur: | 275°C |
| Modifikatorsubstanz: | 15µg/cm², 1 Ma.-% Stearinsäureanhydrid in Benzinfraktion |
| Wasserrandwinkel: | Fortschreitwinkel: 95° (72°) Rückzugswinkel: 50° (35°) |

(Die Werte in Klammern sind von den unmodifizierten Proben)

## Patentansprüche

1. Verfahren zur Modifizierung von Kunststoffoberflächen bei dem während oder unmittelbar nach einem Formgebungsprozess und unter Ausnutzung der Werkzeug- und/oder Materialwärme die Temperatur der Kunststoffoberfläche mindestens die onset-Temperatur des Reaktionspeaks in der DSC-Kurve ist, eine oder mehrere Modifikatorsubstanz(en) ganz oder teilweise mit der Oberfläche der geformten Kunststoffe in Kontakt gebracht wird, wobei als Modifikatorsubstanz(en) solche Stoffe eingesetzt werden, die mit der Oberfläche des geformten Kunststoffes eine Reaktion eingehen und durch Interdiffusion in die Oberfläche eindringen und auf der Oberfläche aufschmelzen, oder die mit der Oberfläche des geformten Kunststoffes eine Reaktion eingehen und auf der Oberfläche aufschmelzen.

2. Verfahren nach Anspruch 1, bei dem die Modifikatorsubstanzen in fester, flüssiger oder gasförmiger Form eingesetzt werden.

3. Verfahren nach Anspruch 1, bei dem die Modifikatorsubstanzen in reiner Form oder als Gemisch, oder in einem Lösungsmittel gelöst, oder als Dampf oder als Aerosol eingesetzt werden.

4. Verfahren nach Anspruch 1, bei dem die Modifikatorsubstanzen unter Druck mit der Kunststoffoberfläche in Kontakt gebracht werden.

5. Verfahren nach Anspruch 1, bei dem die Modifikatorsubstanzen als reines Pulver oder Pulvergemisch durch elektrostatische Verfahren mit der Kunststoffoberfläche in Kontakt gebracht werden.

6. Verfahren nach Anspruch 1, bei dem die Modifikatorsubstanzen als Flüssigkeitströpfchen durch elektrostatische Verfahren mit der Kunststoffoberfläche in Kontakt gebracht werden.

7. Verfahren nach Anspruch 1, bei dem die Modifikatorsubstanzen mit der ganzen Kunststoffoberfläche in Kontakt gebracht werden.

8. Verfahren nach Anspruch 1, bei dem als Modifikatorsubstanzen solche Stoffe eingesetzt werden, die teilweise durch Interdiffusion in die Oberfläche eindringen.

9. Verfahren nach Anspruch 1, bei dem nukleophile und/oder elektrophile Verbindungen als Modifikatorsubstanzen für Polykondensate oder Polyadditionsverbindungen und bei dem nukleophile Verbindungen als Modifikatorsubstanzen für halogenierte/halogenhaltige Polyvinylverbindungen oder Gemische davon eingesetzt werden.

10. Verfahren nach Anspruch 9, bei dem Modifikatorsubstanzen zur Modifizierung von Polyamidverbindungen aus einer oder mehreren Funktionalitäten der Verbindungsklassen Carbonsäure und/oder Carbonsäureanhydrid und/oder Epoxyverbindungen und/oder Isocyanat und/oder Oxazolin ausgewählt, eingesetzt werden.

11. Verfahren nach Anspruch 10, bei dem als Modifikatorsubstanzen zur Modifizierung von Polyamidverbindungen Oligo- und/oder Polyacrylsäure oder Maleinsäureanhydridcopolymere eingesetzt werden.

12. Verfahren nach Anspruch 9, bei dem die Modifikatorsubstanzen zur Modifizierung von aliphatischen, teilaromatischen und aromatischen Polyesterverbindungen aus einer oder mehreren Funktionalitäten der Verbindungsklassen primäres und/oder sekundäres Amin oder Epoxyverbindungen und/oder Isocyanat ausgewählt, eingesetzt werden.

13. Verfahren nach Anspruch 12, bei dem als Modfikatorsubstanzen zur Modifizierung von Polyesterverbindungen Hexamethylendiamin, Diethylentriamin, Dipropylentriamin, Diethanolamin, Polyethylenimin, Polyamidamin, Isocyanat-terminierte Oligourethane bei Hydroxy- und/oder Phenolgruppen-terminierten Polyesterverbindungen; Epoxy-modifizierte Bisphenol- und/oder Novolakverbindungen und/oder Oligo-/Polyacrylate und/oder Oligoester bei Carbonsäure- und/oder Phenolgruppen-terminierten Polyesterverbindungen eingesetzt werden.

14. Verfahren nach Anspruch 9, bei dem die Modifikatorsubstanzen zur Modifizierung von Polycarbonatverbindungen aus einer oder mehreren Funktionalitäten der Verbindungsklassen primäres oder sekundäres Amin und/oder aliphatische Hydroxyverbindungen und/oder Epoxyverbindungen und/oder Isocyanat ausgewählt, eingesetzt werden.

15. Verfahren nach Anspruch 14, bei dem als Modifikatorsubstanzen zur Modifizierung von Polycarbonatverbindungen Hexamethylendiamin, Diethylentriamin, Dipropylentriamin, Diethanolamin, Polyethylenimin, Polyamidamin, Pentaerythrith, Glycerin, Oligo- und/oder Polyvinylalkohol, Oligo-/Polyacrylsäureglycolester, Oligo-/Polyacrylethanolamid, Isocyanat-terminierte Oligo-/Polyurethane, Epoxy-modifizierte Bisphenol- und/oder Novolakverbindungen und/oder Oligo-/Polyacrylate und/oder Oligoester eingesetzt werden.

16. Verfahren nach Anspruch 9, bei dem die Modifikatorsubstanzen zur Modifizierung von Polyurethanverbindungen aus einer oder mehreren Funktionalitäten der Verbindungsklassen Carbonsäure und/oder Carbonsäureanhydrid und/oder Epoxyverbindungen und/oder Isocyanat und/oder aliphatische Hydroxyverbindungen und/oder primäres und/oder sekundäres Amin ausgewählt, eingesetzt werden.

17. Verfahren nach Anspruch 16, bei dem als Modifikatorsubstanzen zur Modifizierung von Polyurethanverbindungen Oligo- und/oder Polyacrylsäure, Maleinsäureanhydridcopolymere, Hexamethylendiamin, Diethylentriamin, Dipropylentriamin, Diethanolamin, Pentaerythrith, Glycerin, Oligo- und/oder Polyvinylalkohol, Oligo-/Polyacrylsäureglycolester, Oligo-/Polyacrylethanolamid, Polyethylenimin, Polyamidamin, Isocyanat-terminierte Oligourethane, Epoxy-modifizierte Bisphenol- und/oder Novolakverbindungen und/oder Oligo-/Polyacrylate und/oder Oligoester eingesetzt werden.

18. Verfahren nach Anspruch 9, bei dem die Modifikatorsubstanzen zur Modifizierung von halogenierten/halogenhaltigen Polyvinylverbindungen oder Gemische davon aus einer oder mehreren Funktionalitäten der Verbindungsklassen primäres und/oder sekundäres Amin ausgewählt, eingesetzt werden.

19. Verfahren nach Anspruch 18, bei dem als Modifikatorsubstanzen zur Modifizierung von halogenierten/halogenhaltigen Polyvinylverbindungen oder Gemische davon Hexamethylendiamin, Diethylentriamin, Dipropylentriamin, Ethanolamin, Diethanolamin, Polyethylenimin, Polyamidamin eingesetzt werden.

20. Verfahren nach Anspruch 1, bei dem die Modifikatorsubstanzen einzeln, als Gemisch oder als Mischungen eingesetzt werden.

21. Verfahren nach Anspruch 1, bei dem die Modifikatorsubstanzen auf die Oberfläche gesprüht, gedampft oder über einen Flüssigkeitsfilm aufgebracht werden.

22. Verfahren nach Anspruch 1, bei dem die Modifikatorsubstanzen in einer Konzentration im Bereich von 1 x 10⁻¹⁰ bis 1 x 10⁻⁶ mol/cm² aufgebracht werden.

23. Verfahren nach Anspruch 1, bei dem die Modifikatorsubstanzen auf die Oberfläche des Kunststoffes oder vor der Formgebung auf die Oberfläche des Formwerkzeuges aufgebracht werden.

24. Verfahren nach Anspruch 1, bei dem die Modifikatorsubstanzen als verdünnte Lösung auf die Oberfläche des Formwerkzeuges aufgesprüht werden.

25. Verfahren nach Anspruch 1, bei dem als Modifikatorsubstanzen zur Passivierung für Polykondensate oder Polyadditionsverbindungen oder halogenierte/halogenhaltige Polyvinylverbindungen Verbindungen mit mindestens einer reaktiven Gruppe eingesetzt werden.

26. Verfahren nach Anspruch 25, bei dem als Modifikatorsubstanzen zur Modifizierung von Polyamidverbindungen perfluorierte und/oder fluorhaltige und/oder siliconhaltige und/oder paraffinische, niedermolekulare und/oder oligomere und/oder polymere Verbindungen mit mindestens einer Funktionalität aus den Verbindungsklassen Carbonsäure und/oder Carbonsäureanhydrid und/oder Epoxyverbindung und/oder Isocyanat und/oder Oxazolin eingesetzt werden.

27. Verfahren nach Anspruch 25, bei dem als Modifikatorsubstanzen zur Modifizierung von aliphatischen, teilaromatischen oder aromatischen Polyesterverbindungen perfluorierte und/oder fluorhaltige und/oder siliconhaltige und/oder paraffinische, niedermolekulare und/oder oligomere und/oder polymere Verbindungen mit mindestens einer Funktionalität aus den Verbindungsklassen primäres und/oder sekundäres Amin oder Epoxyverbindung und/oder Isocyanat eingesetzt werden.

28. Verfahren nach Anspruch 25, bei dem als Modifikatorsubstanzen zur Modifizierung von Polycarbonatverbindungen perfluorierte und/oder fluorhaltige und/oder siliconhaltige und/oder paraffinische, niedermolekulare und/oder oligomere und/oder polymere Verbindungen mit mindestens einer Funktionalität aus den Verbindungsklassen primäres und/oder sekundäres Amin und/oder aliphatische Hydroxyverbindungen oder Epoxyverbindung und/oder Isocyanat eingesetzt werden.

29. Verfahren nach Anspruch 25, bei dem als Modifikatorsubstanzen zur Modifizierung von Polyurthanverbindungen perfluorierte und/oder fluorhaltige und/oder siliconhaltige und/oder paraffinische, niedermolekulare und/oder oligomere und/oder polymere Verbindungen mit mindestens einer Funktionalität aus den Verbindungsklassen Carbonsäure und/oder Carbonsäureanhydrid und/oder Epoxyverbindung und/oder Isocyanat und/oder aliphatische Hydroxyverbindungen und/oder primäres und/oder sekundäres Amin eingesetzt werden.

30. Verfahren nach Anspruch 25, bei dem als Modifikatorsubstanzen zur Modifizierung von Polyvinyl- und/oder Polyvinylidenhalogenidverbindungen perfluorierte und/oder fluorhaltige und/oder siliconhaltige und/oder paraffinische, niedermolekulare und/oder oligomere und/oder polymere Verbindungen mit mindestens einer Funktionalität aus den Verbindungsklassen primäres und/oder sekundäres Amin eingesetzt werden.

## Claims

1. Process for modification of plastics surfaces wherein, during or directly after a shape-conferring operation and by utilization of the mould and/or material heat the temperature of the plastics surface is at least the onset temperature of the reaction peak in the DSC curve, one or more modifier substances are wholly or partly contacted with the surface of the shaped plastics, the modifier substance or substances used comprising entities which enter a reaction with the surface of the shaped plastic and by interdiffusion penetrate into the surface and melt on the surface, or which enter a reaction with the surface of the shaped plastic and melt on the surface.

2. Process according to Claim 1, wherein the modifier substances are used in solid, liquid or gaseous form.

3. Process according to Claim 1, wherein the modifier substances are used in pure form or as a mixture or dissolved in a solvent or as vapour or as aerosol.

4. Process according to Claim 1, wherein the modifier substances are contacted with the plastics surface under pressure.

5. Process according to Claim 1, wherein the modifier substances are contacted with the plastics surface as a pure powder or powder mixture by electrostatic processes.

6. Process according to Claim 1, wherein the modifier substances are contacted with the plastics surface as liquid droplets by electrostatic processes.

7. Process according to Claim 1, wherein the modifier substances are contacted with the entire plastics surface.

8. Process according to Claim 1, wherein the modifier substances used comprise materials which partly penetrate into the surface by interdiffusion.

9. Process according to Claim 1, wherein nucleophilic and/or electrophilic compounds are used as modifier substances for polycondensates or poly-addition compounds and wherein nucleophilic compounds are used as modifier substances for halogenated/halogen-containing polyvinyl compounds or mixtures thereof.

10. Process according to Claim 9, wherein modifier substances for modification of polyamide compounds are selected from one or more functionalities of the compound classes of carboxylic acid and/or carboxylic anhydride and/or epoxy compounds and/or isocyanate and/or oxazoline.

11. Process according to Claim 10, wherein oligo- and/or polyacrylic acid or maleic anhydride copolymers are used as modifier substances for modification of polyamide compounds.

12. Process according to Claim 9, wherein the modifier substances for modification of aliphatic, partly aromatic and wholly aromatic polyester compounds are selected from one or more functionalities of the compound classes of primary and/or secondary amine or epoxy compounds and/or isocyanate.

13. Process according to Claim 12, wherein modifier substances for modification of polyester compounds comprise hexamethylenediamine, diethylenetriamine, dipropylenetriamine, diethanolamine, polyethyleneimine, polyamideamine, isocyanate-terminated oligourethanes in the case of hydroxyl and/or phenol group-terminated polyester compounds; epoxy-modified bisphenol and/or novolak compounds and/or oligo-/polyacrylates and/or oligoesters in the case of carboxylic acid and/or phenol group-terminated polyester compounds.

14. Process according to Claim 9, wherein the modifier substances for modification of polycarbonate compounds are selected from one or more functionalities of the compound classes of primary or secondary amine and/or aliphatic hydroxy compounds and/or epoxy compounds and/or isocyanate.

15. Process according to Claim 14, wherein modifier substances for modification of polycarbonate compounds comprise hexamethylenediamine, diethylenetriamine, dipropylenetriamine, diethanolamine, polyethyleneimine, polyamideamine, pentaerythritol, glycerol, oligo- and/or polyvinyl alcohol, oligo-/polyacrylic acid glycol ester, oligo-/polyacrylic ethanolamide, isocyanate-terminated oligo-/polyurethanes, epoxy-modified bisphenol and/or novolak compounds and/or oligo-/polyacrylates and/or oligoesters.

16. Process according to Claim 9, wherein the modifier substances for modification of polyurethane compounds are selected from one or more functionalities of the compound classes of carboxylic acid and/or carboxylic anhydride and/or epoxy compounds and/or isocyanate and/or aliphatic hydroxy compounds and/or primary and/or secondary amine.

17. Process according to Claim 16, wherein modifier substances for modification of polyurethane compounds comprise oligo- and/or polyacrylic acid, maleic anhydride copolymers, hexamethylenediamine, diethylenetriamine, dipropylenetriamine, diethanolamine, pentaerythritol, glycerol, oligo- and/or polyvinyl alcohol, oligo-/polyacrylic glycol ester, oligo-/polyacrylic ethanolamide, polyethyleneimine, polyamideamine, isocyanate-terminated oligourethanes, epoxy-modified bisphenol and/or novolak compounds and/or oligo-/polyacrylates and/or oligoesters.

18. Process according to Claim 9, wherein the modifier substances for modification of halogenated/halogen-containing polyvinyl compounds or mixtures thereof are selected from one or more functionalities of the compound classes of primary and/or secondary amine.

19. Process according to Claim 18, wherein modifier substances for modification of halogenated/halogen-containing polyvinyl compounds or mixtures thereof comprise hexamethylenediamine, diethylenetriamine, dipropylenetriamine, ethanolamine, diethanolamine, polyethyleneimine, polyamideamine.

20. Process according to Claim 1, wherein the modifier substances are used singly, as a mixture or as blends.

21. Process according to Claim 1, wherein the modifier substances are applied to the surface by spraying, a vapour deposition or via a film of liquid.

22. Process according to Claim 1, wherein the modifier substances are applied in a concentration ranging from 1 × 10⁻¹⁰ to 1 × 10⁻⁶ mol/cm².

23. Process according to Claim 1, wherein the modifier substances are applied to the surface of the plastic or, before shape conferral, to the surface of the shaping mould.

24. Process according to Claim 1, wherein the modifier substances are sprayed as a dilute solution onto the surface of the shaping mould.

25. Process according to Claim 1, wherein compounds having at least one reactive group are used as passivating modifier substances for polycondensates or polyaddition compounds or halogenated/halogen-containing polyvinyl compounds.

26. Process according to Claim 25, wherein modifier substances for modification of polyamide compounds comprise perfluorinated and/or fluorine-containing and/or silicone-containing and/or paraffinic, low molecular weight and/or oligomeric and/or polymeric compounds having at least one functionality from the compound classes of carboxylic acid and/or carboxylic anhydride and/or epoxy compound and/or isocyanate and/or oxazoline.

27. Process according to Claim 25, wherein modifier substances for modification of aliphatic, partly aromatic or wholly aromatic polyester compounds comprise perfluorinated and/or fluorine-containing and/or silicone-containing and/or paraffinic, low molecular weight and/or oligomeric and/or polymeric compounds having at least one functionality from the compound classes of primary and/or secondary amine or epoxy compound and/or isocyanate.

28. Process according to Claim 25, wherein modifier substances for modification of polycarbonate compounds comprise perfluorinated and/or fluorine-containing and/or silicone-containing and/or paraffinic, low molecular weight and/or oligomeric and/or polymeric compounds having at least one functionality from the compound classes of primary and/or secondary amine and/or aliphatic hydroxy compounds or epoxy compound and/or isocyanate.

29. Process according to Claim 25, wherein modifier substances for modification of polyurethane compounds comprise perfluorinated and/or fluorine-containing and/or silicone-containing and/or paraffinic, low molecular weight and/or oligomeric and/or polymeric compounds having at least one functionality from the compound classes of carboxylic acid and/or carboxylic anhydride and/or epoxy compound and/or isocyanate and/or aliphatic hydroxy compounds and/or primary and/or secondary amine.

30. Process according to Claim 25, wherein modifier substances for modification of polyvinyl and/or polyvinylidene halide compounds comprise perfluorinated and/or fluorine-containing and/or silicone-containing and/or paraffinic, low molecular weight and/or oligomeric and/or polymeric compounds having at least one functionality from the compound classes of primary and/or secondary amine.

## Revendications

1. Procédé pour la modification de surfaces en matériau synthétique dans lequel, pendant ou immédiatement après un processus de façonnage et avec utilisation de la chaleur de l'outil et/ou du matériau, la température de la surface en matériau synthétique est au moins la température de démarrage du pic de réaction dans la courbe DSC, une ou plusieurs substances de modification sont mises totalement ou partiellement en contact avec la surface du matériau synthétique façonné, en utilisant comme substance(s) de modification des substances qui entrent en réaction avec la surface du matériau synthétique façonné et qui pénètrent par interdiffusion dans la surface et qui fondent sur la surface ou qui entrent en réaction avec la surface du matériau synthétique façonné et qui fondent sur la surface.

2. Procédé selon la revendication 1, dans lequel les substances de modification sont utilisées sous forme solide, liquide ou gazeuse.

3. Procédé selon la revendication 1, dans lequel les substances de modification sont utilisées sous forme pure ou sous forme de mélange ou sous forme dissoute dans un solvant ou sous forme de vapeur ou sous forme d'aérosol.

4. Procédé selon la revendication 1, dans lequel les substances de modification sont mises en contact sous pression avec la surface en matériau synthétique.

5. Procédé selon la revendication 1, dans lequel les substances de modification sont mises en contact avec la surface en matériau synthétique sous forme de poudre pure ou de mélange de poudres par des procédés électrostatiques.

6. Procédé selon la revendication 1, dans lequel les substances de modification sont mises en contact avec la surface en matériau synthétique sous forme de gouttes de liquide par des procédés électrostatiques.

7. Procédé selon la revendication 1, dans lequel les substances de modification sont mises en contact avec toute la surface en matériau synthétique.

8. Procédé selon la revendication 1, dans lequel on utilise comme substances de modification des substances qui pénètrent partiellement par interdiffusion dans la surface.

9. Procédé selon la revendication 1, dans lequel on utilise des composés nucléophiles et/ou électrophiles comme substances de modification pour des produits de polycondensation ou des composés de polyaddition et dans lequel on utilise des composés nucléophiles comme substances de modification pour les composés de type polyvinyle halogénés/contenant des halogènes ou des mélanges de ceux-ci.

10. Procédé selon la revendication 9, dans lequel on utilise des substances de modification pour la modification de composés de type polyamide choisies parmi une ou plusieurs fonctionnalités des classes de composés acide carboxylique et/ou anhydride de l'acide carboxylique et/ou composés époxy et/ou isocyanate et/ou oxazoline.

11. Procédé selon la revendication 10, dans lequel on utilise comme substances de modification pour la modification de composés de type polyamide, de l'oligo(acide acrylique) et/ou du poly(acide acrylique) ou des copolymères d'anhydride de l'acide maléique.

12. Procédé selon la revendication 9, dans lequel on utilise, pour la modification de composés de type polyester aliphatiques, partiellement aromatiques et aromatiques, les substances de modification choisies parmi une ou plusieurs fonctionnalités des classes de composés amine primaire et/ou secondaire ou composés époxy et/ou isocyanate.

13. Procédé selon la revendication 12, dans lequel on utilise comme substances de modification pour la modification de composés de type polyester, l'hexaméthylènediamine, la diéthylènetriamine, la dipropylènetriamine, la diéthanolamine, la polyéthylène-imine, la polyamidamine, les oligo-uréthanes terminés par isocyanate pour des composés de type polyester terminés par des groupes hydroxy et/ou phénol ; les composés de type bisphénol et/ou novolaque modifiés par époxy et/ou les oligoacrylates/polyacrylates et/ou les oligoesters pour des composés de type polyester terminés par des groupes acide carboxylique et/ou phénol.

14. Procédé selon la revendication 9, dans lequel on utilise, pour la modification de composés de type polycarbonate, les substances de modification choisies parmi une ou plusieurs fonctionnalités des classes de composés amine primaire ou secondaire et/ou composés hydroxy aliphatiques et/ou composés époxy et/ou isocyanate.

15. Procédé selon la revendication 14, dans lequel on utilise comme substances de modification pour la modification de composés de type polycarbonate, l'hexaméthylènediamine, la diéthylènetriamine, la dipropylènetriamine, la diéthanolamine, la polyéthylène-imine, la polyamidamine, le pentaérythritol, le glycérol, l'oligo(alcool vinylique) et/ou le poly(alcool vinylique), l'oligo(ester glycolique de l'acide acrylique)/poly(ester glycolique de l'acide acrylique), l'oligoacryléthanolamide/polyacryléthanolamide, les oligo-uréthanes/polyuréthanes terminés par isocyanate, les composés de type bisphénol et/ou novolaque modifiés par époxy et/ou les oligoacrylates/polyacrylates et/ou les oligoesters.

16. Procédé selon la revendication 9, dans lequel on utilise, pour la modification de composés de type polyuréthane, les substances de modification choisies parmi une ou plusieurs fonctionnalités des classes de composés acide carboxylique et/ou anhydride d'acide carboxylique et/ou composés époxy et/ou isocyanate et/ou composés hydroxy aliphatiques et/ou amine primaire et/ou secondaire.

17. Procédé selon la revendication 16, dans lequel on utilise comme substances de modification pour la modification de composés de type polyuréthane, l'oligo(acide acrylique) et/ou le poly(acide acrylique), les copolymères d'anhydride de l'acide maléique, l'hexaméthylènediamine, la diéthylènetriamine, la dipropylènetriamine, la diéthanolamine, le pentaérythritol, le glycérol, l'oligo(alcool vinylique) et/ou le poly(alcool vinylique), l'oligo(ester glycolique de l'acide acrylique)/poly(ester glycolique de l'acide acrylique), l'oligoacryléthanolamide/polyacryléthanolamide, la polyéthylène-imine, la polyamidamine, les oligo-uréthanes terminés par isocyanate, les composés de type bisphénol et/ou novolaque modifiés par époxy et/ou les oligoacrylates/polyacrylates et/ou les oligoesters.

18. Procédé selon la revendication 9, dans lequel on utilise, pour la modification de composés de type polyvinyle halogénés/contenant des halogènes ou des mélanges de ceux-ci, les substances de modification choisies parmi une ou plusieurs fonctionnalités des classes de composés amine primaire et/ou secondaire.

19. Procédé selon la revendication 18, dans lequel on utilise comme substances de modification pour la modification de composés de type polyvinyle halogénés/contenant des halogènes ou des mélanges de ceux-ci, l'hexaméthylènediamine, la diéthylènetriamine, la dipropylènetriamine, l'éthanolamine, la diéthanolamine, la polyéthylène-imine, la polyamidamine.

20. Procédé selon la revendication 1, dans lequel on utilise les substances de modification seules, sous forme de mélange ou sous forme de compositions.

21. Procédé selon la revendication 1, dans lequel les substances de modification sont appliquées sur la surface par pulvérisation, vaporisation ou via un film liquide.

22. Procédé selon la revendication 1, dans lequel les substances de modification sont appliquées en une concentration dans la plage de 1 x 10⁻¹⁰ à 1 x 10⁻⁶ mole/cm²_{.}

23. Procédé selon la revendication 1, dans lequel les substances de modification sont appliquées sur la surface du matériau synthétique ou avant le façonnage sur la surface de l'outil de façonnage.

24. Procédé selon la revendication 1, dans lequel les substances de modification sont pulvérisées sur la surface de l'outil de façonnage sous forme de solution diluée.

25. Procédé selon la revendication 1, dans lequel on utilise comme substances de modification pour la passivation des produits de polycondensation ou des composés de polyaddition ou des composés de type polyvinyle halogénés/contenant des halogènes, des composés comprenant au moins un groupe réactif.

26. Procédé selon la revendication 25, dans lequel on utilise comme substances de modification pour la modification de composés de type polyamide, des composés de bas poids moléculaire et/ou oligomères et/ou polymères perfluorés et/ou fluorés et/ou siliconés et/ou paraffiniques présentant au moins une fonctionnalité des classes de composés acide carboxylique et/ou anhydride de l'acide carboxylique et/ou composé époxy et/ou isocyanate et/ou oxazoline.

27. Procédé selon la revendication 25, dans lequel on utilise comme substances de modification pour la modification de composés de type polyester aliphatiques, partiellement aromatiques ou aromatiques, des composés de bas poids moléculaire et/ou oligomères et/ou polymères perfluorés et/ou fluorés et/ou siliconés et/ou paraffiniques présentant au moins une fonctionnalité des classes de composés amine primaire et/ou secondaire ou composé époxy et/ou isocyanate.

28. Procédé selon la revendication 25, dans lequel on utilise comme substances de modification pour la modification de composés de type polycarbonate, des composés de bas poids moléculaire et/ou oligomères et/ou polymères perfluorés et/ou fluorés et/ou siliconés et/ou paraffiniques présentant au moins une fonctionnalité des classes de composés amine primaire et/ou secondaire et/ou composés hydroxy aliphatiques ou composé époxy et/ou isocyanate.

29. Procédé selon la revendication 25, dans lequel on utilise comme substances de modification pour la modification de composés de type polyuréthane, des composés de bas poids moléculaire et/ou oligomères et/ou polymères perfluorés et/ou fluorés et/ou siliconés et/ou paraffiniques présentant au moins une fonctionnalité des classes de composés acide carboxylique et/ou anhydride d'acide carboxylique et/ou composé époxy et/ou isocyanate et/ou composés hydroxy aliphatiques et/ou amine primaire et/ou secondaire.

30. Procédé selon la revendication 25, dans lequel on utilise comme substances de modification pour la modification de composés de type poly(halogénure de vinyle) et/ou poly(halogénure de vinylidène), des composés de bas poids moléculaire et/ou oligomères et/ou polymères perfluorés et/ou fluorés et/ou siliconés et/ou paraffiniques présentant au moins une fonctionnalité des classes de composés amine primaire et/ou secondaire.
